# EUROPEAN PATENT APPLICATION

(11) **EP 1 965 530 A1**
(43) Date of publication of application: **03.09.2008**
(21) Application number: 05824254.6
(22) Date of filing: 23.12.2005
(51) Int. Cl.: H04J 14/02

(54) **A METHOD FOR SOFT REROUTING IN OPTICAL NETWORK**

(71) Applicant: ZTE Corporation, Shenzhen, Guangdong 518057 (CN)
(72) Inventor: WU, Wenjian, Guangdong 518057 (CN)
(74) Representative: Leszczynski, André
(86) International application number: PCT/CN2005/002295
(87) International publication number: WO 2007/071114

(57) **Abstract**

The present invention discloses a method for soft-rerouting in optical network, comprising: initiating an instruction of soft-rerouting by an upper-layer application, in which information of an originating node, a terminating node and replacing routing nodes of a current connection to be rerouted is specified; setting up a replacing connection segment with respect to a reference connection segment according to information of the replacing routing nodes by transmitting signaling message between the originating node and the terminating node; and switching a service from the reference connection segment to the replacing connection segment by transmitting a signaling message between the originating node and the terminating node. The present invention implements the soft-rerouting in optical networks of various topologies, with high efficiency and reliability, and independent of data in transmission.

## Description

### FIELD OF THE INVENTION

The present invention relates to a technology of soft-rerouting, more particularly to a method for soft-rerouting in optical network.

### DESCRIPTION OF THE BACKGROUND ART

In optical network, especially in intelligent optical network (ION), the network performance will be suffering due to unreasonable use of resource, such as the increased times of operations for setting up and deleting a connection in the network or the extended operation time of the network. Therefore, it is necessary to adjust routing of some connections to optimize network resource. Furthermore, it is also possible for the network to be maintained to adjust the network resource such as add nodes or links during the network operation. Therefore some connections may be affected during the resource adjustment, so the affected connections should be rerouted to avoid the area which is under maintenance. Such an operation for rerouting belongs to an internal operation within the network, thereby, the affection caused by the operation should not exceed allowable limit required by the customers.

Rerouting, which includes soft-rerouting and hard-rerouting, is a technique of setting up a replacing connection for a current connection. The hard-rerouting, entitled "break-before-make", is firstly releasing the current connection and then setting up the replacing connection for the current connection. Contrarily, the soft-rerouting is firstly setting up the replacing connection, and then releasing the current connection after switching service successful from the current connection to the replacing connection, also entitled "make-before-break".

Compared with hard-rerouting, the soft-rerouting has advantages of short interrupt time (users even not sense) and high reliability, so it is always used in network optimization and maintenance in practice.

A kind of conventional rerouting method is that the connection for service is set up and adjusted by manual. That is, the network administrator initiates a command in order to switch a service from the current connection to the replacing connection after the replacing connection is set up. This method needs lots of manual actions, so it is inefficient under the environments of the network with more and more complicated topology as well as increasing dimension. Another kind of conventional rerouting method is that the replacing connection is set up firstly after confirming the rerouting nodes and links, then the service is switched using idle overhead or special sequence of service signal. This method causes special requirement for the network topology and service signal.

In the data network, the traditional soft-rerouting method is to set up replacing connection and then break current connection, and there is no apparent service switching action. It is feasible in the data network because the transmission of data in the network is based on the packet switching. The packets will be forwarded according to forward table in data level after the replacing connection is set up. However, the transmission of data in the optical network is based on time division, or wave division or space division, the switching to the replacing connection is implemented by hardware actions of equipment. Therefore, the apparent signaling is introduced to harmonize switching and to ensure reliability when switching.

The rerouting technique is improved as the management and control of optical network being intelligentized. However, the technique of hard-rerouting is merely developed under the circumstance, not for that of soft-rerouting. Currently, although signaling procedures and messages related with setting up and deleting connection are defined in the signaling standard protocol related with intelligent optical network, these procedures and messages can not completely satisfy the requirement for soft-rerouting of a segment of the current connection.

Now, there are some conventional methods of fast rerouting. For example, a method of the prior art is that the switching is initiated by fault information, but it is not suitable for network maintenance because a service damage may be caused if the switching fails. In another method of the prior art, the switching is implemented use idle overhead of service signal. That is, in control level, signaling in control level or configuration in management level related with rerouting takes charge of choosing a new path and setting up connection for the new path. However, during signaling/configuration the mapping relation of processing module in circuit level in source but not destination is configured for switching. Thus, in data framing level the general framing procedure (GFP), which is used to implement framing and adapting, is extended and supplied by utilizing undefined idle overhead of ITU-T G.7041 to redefine Mapping Relationship Indication (MRI) domain to transmit mapping indication information necessary for rerouting, and thus configuration operation of mapping relation switching can be implemented by GFP overhead bytes. But the disadvantage of the method is that the service data must be encapsulated in special form, i.e. GFP.

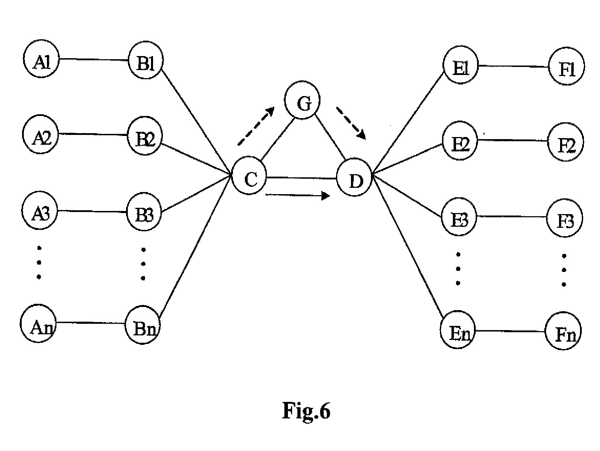

Moreover, when the soft-rerouting is implemented by existing signaling technique (RSVP-TE), even if only one part of connection routing needs adjusting, the adjustment still must be done from the source node. If so, in some case the bandwidth may be seriously occupied by signaling in network. Referring to Fig 6, suppose that the network maintenance should be done at the segment between node C and node D by the operator. According the method of the prior art, all the current connections as shown by solid-line arrow between node C and node D must be switched to path <CGD> as shown by dashed-line arrow. There are totally n connections, routing of which are respectively <AiBiCDEiFi> (i=1∼n). In these connections, there is no same node expect for node C and node D. According to the implementing methods of the signaling techniques (such as RSVP-TE), a new connection for each current connection between source node (A1∼An) and designation node (F1∼Fi) (i=1∼n) has to be set up during soft-rerouting, then the original n connections can be deleted from sources (A1∼An). Actually for each connection, , the procedures for sending signaling to set up and delete connections in the segments between node A and node C and between node D and node F are redundant, which occupy lots of bandwidth of network.

### SUMMARY OF THE INVENTION

The present invention provides a method for soft-rerouting in optical network to be able to implement the soft-rerouting in optical networks of various topologies, independent of data in transmission, aiming to solve the above problem in related arts.

To achieve above object the present invention provides a method for soft-rerouting in optical network, comprising: initiating an instruction of soft-rerouting by an upper-layer application, in which information of an originating node, a terminating node and replacing routing nodes of a current connection to be rerouted is specified; setting up a replacing connection segment with respect to a reference connection segment according to information of the replacing routing nodes by transmitting signaling message between the originating node and the terminating node; and switching a service from the reference connection segment to the replacing connection segment by transmitting a signaling message between the originating node and the terminating node.

The method according to the present invention may further comprises: deleting the reference connection segment and releasing resource occupied by the reference connection segment by transmitting signaling message if the switch is successful; and sending a response of switching success to the upper-layer application.

The method according to the present invention may further comprises: switching the service again from the reference connection segment to the replacing connection segment if the switch fails; and sending a response of switching failure to the upper-layer application if failure times achieve a predetermined threshold.

The method according to the present invention may further comprises: collecting information of the nodes of the current connection by transmitting the signaling message and updating local routing information of each node of the current connection according to the collected information.

The method according to the present invention, the step of setting up a replacing connection segment may comprises: establishing association relationship between the reference connection segment and the replacing connection segment according to the information of the originating node, the terminating node and replacing routing nodes after the originating node of the soft-rerouting receives the instruction of soft-rerouting, and generating signaling message for setting up the replacing connection segment, wherein said association relationship is carried in said signaling message; setting up the replacing connection segment using resource which is different from that of the reference connection segment by transmitting the signaling message along the route of replacing connection; and associating the reference connection segment with the replacing connection segment by the terminating node of the soft-rerouting according to the association relationship carried in the signaling message, and sending signaling message for indicating that the replacing connection segment is set up along the nodes of the replacing routing towards the originating node.

The method according to the present invention, wherein the step of switching a service from the reference connection segment to the replacing connection segment may comprises: switching the service at the originating node of the soft-rerouting, and sending the signaling message to the terminating node for requesting the service switching, in which information in relation with the request for service switching and status of the originating node after switching is carried; and switching the service at the terminating node of the soft-rerouting after the terminating node receives the signaling message for requesting service switching, and sending a signaling message back to the originating node, in which information relating to switching status of the terminating node is carried.

The method according to the present invention, wherein the step of deleting the reference connection segment and releasing resource occupied by the reference connection segment comprises: releasing the resource occupied by the reference connection segment at the originating node of the soft-rerouting and generating a signaling message for forcibly deleting the connection by the originating node of the soft-rerouting, in which information related to the replacing connection segment is carried in order to judge whether the signaling message for forcibly deleting the connection arrives at the terminating node of the reference connection segment; and transmitting the signaling message for forcibly deleting the connection along the routing of the reference connection segment, and releasing the resource occupied by the reference connection segment at the middle nodes and terminating node.

The method according to the present invention, wherein the step of collecting information of the nodes of the current connection and updating local routing information of each node of the current connection comprises: collecting routing information of the current connection to construct a refreshing message by the originating node or the terminating node of the soft-rerouting, in which an identifier of refreshing status and the collected routing information of the current connection; sending the refreshing message to upstream nodes and downstream nodes along the current connection; and each node updating local routing information according to the identifier of refreshing status and the collected routing information of the current connection and forwarding the refreshing message after receiving the refreshing message.

It is efficient for the method of soft-rerouting of the present invention, and reliability is improved by apparently controlling service switching according to signaling. The present invention is independent of transmitted service signal in network and network topology, the originating node of the soft-rerouting can be any node of the current connection, but not limited to source node, also the band width occupied by network signaling can be substantially reduced by synchronizing signaling state using refreshing message. Because at the originating node and terminating node of the soft-rerouting 1+1 protection configuration or the like is utilized between the reference connection segment and the replacing connection segment and the switching time is the same level as the switching time of the 1+1 protection, the affection for the service in the optical network can be ignored.

### BRIEF DESCRIPTION OF THE DRAWINGS

FIG. 1 is a flow chart of the method for soft-rerouting according to an embodiment of the present invention;

FIG. 2 is a diagram of service switching according to the embodiment of the present invention;

FIG. 3 is a diagram of network topology according to the embodiment of the present invention;

FIG. 4-1, 4-2 are diagrams of sources occupied according to the embodiment of the present invention;

FIG 5 is a flow chart of service switching according to the embodiment of the present the invention;

FIG 6 is a diagram of network maintenance according to the embodiment of the present invention.

### DETAILED DESCRIPTION OF THE PREFERRED EMBODIMENTS

Before describing the embodiment in detail, the terms are defined in advance. That is,
"connection" indicating collection of network nodes and links for carrying a service;
"reference connection" indicating the connection for carrying service before soft-rerouting;
"reference connection segment" indicating the connection segment for carrying a service between two nodes before soft-rerouting;
"replacing connection segment" indicating the connection segment for replacing the reference connection segment during soft-rerouting;
"replacing connection" indicating the connection for replacing the reference connection after soft-rerouting;
"current connection" indicating the reference connection before soft-rerouting, but the replacing connection after soft-rerouting.

The present invention utilizes signaling to implement soft-rerouting in optical network, and in the meantime of setting up replacing connection, only two network nodes for soft-rerouting in replacing connection are associated with those in current connection (reference connection), but not other nodes. Thus, the 1+1 protection relationship or the like is formed between two network nodes for soft-rerouting in the replacing connection and those in current connection. After setting up the replacing connection, the service is switched from two network nodes for soft-rerouting in the current connection to those in the replacing connection by communication signaling, and if the switching is successful, resource of the reference connection segment will be released by signaling. Finally, the signaling states for connecting all nodes will be updated by signaling refreshing message.

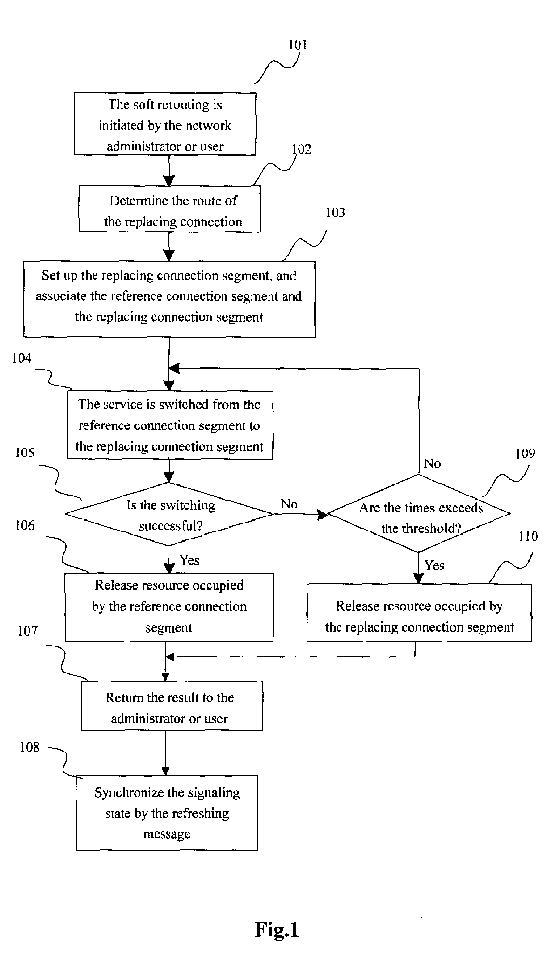

Now referring to Fig 1, firstly, the network administrator or user (i.e., an upper-application) initiates an instruction of soft-rerouting in step 101. In said instruction, information of an originating node, a terminating node and replacing routing nodes for current connection to be rerouted is specified.. The originating node and terminating node of the soft-rerouting may be the source node and destination node, or any two nodes between the source node and destination node, but these two nodes must store routing and service information of the current connection.

Next, the route of the replacing connection can be determined according to the instruction for soft-rerouting in step 102.

Then, in step 103, the replacing connection segment can be set up between the originating node and the terminating node of soft-rerouting by a standard or user defined signaling message, and can thereby form 1+1 protection relationship or the like between the reference connection segment and the replacing connection segment. This step comprises: 1. at the originating node, associate the reference connection segment with the replacing connection segment to form 1+1 protection relationship or the like, and the association relationship will be carried in special field of signaling message; 2. the replacing connection segment and the reference connection segment occupy different resources at the middle nodes along the route of the replacing connection segment; 3. according to the association relationship carried in the special field of the signaling message, 1+1 protection relationship or the like can be also formed at the terminating node by associating the reference connection segment with the replacing connection segment; 4. the terminating node sends the signaling message to the originating node through the route of the replacing connection for indicating that the replacing connection is set up successfully.

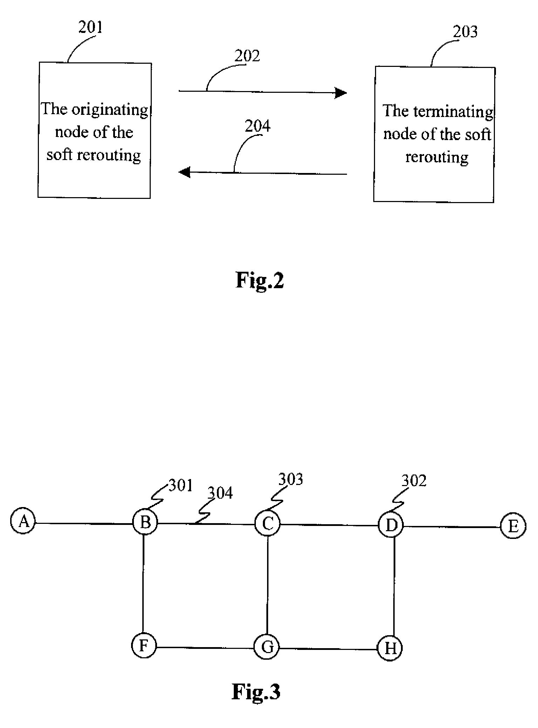

After the replacing connection is set up successfully, the service is eventually switched from the reference connection segment to the replacing connection segment in step 104 by communicating signaling between the originating node and the terminating node. Referring to Fig. 2, the step 104 comprise: 1. the service is switched in advance at the originating node 201 of the soft-rerouting, and a request for switching service is sent towards the terminating node 203 by signaling message 202 after the switching is succeeded, according to the invention, information in relation with the request for switching service and a status of the originating node after switching is carried in the special field of the message 202; 2. after the message 202 for requesting service switching is received by the terminating node 203 of the soft-rerouting, the service will be switched at the terminating node 203, and a signaling message 204 is sent towards the originating node 201 of the soft-rerouting after switching is succeeded, wherein the service switching state of the terminating node is carried in special field of the signaling message 204.

In addition, a judgment is preferable in step 105 after the originating node of the soft-rerouting sends the request for switching service towards the terminating node in order to determine whether the switching is successful or not. If the originating node receives a response indicating switching success, then the switching is judged to be success, therefore goes to step 106; If the originating node receives a response indicating switching failed or does not receive response till time out, then the switching is judged to be failed, therefore goes to step 109.

In step 106 a signaling message for forcibly deleting the reference connection is generated and the resource occupied by the reference connection is released. Step 106 comprises: 1. firstly, the originating node of the soft-rerouting releases the resource occupied by the reference connection segment, and sends a signaling message for forcibly deleting the connection. Specially, information related with the replacing connection segment, at least including the information about originating node and terminating node, is carried in the special field of the message; 2. the middle nodes ahead of the terminating node along the reference connection segment release the resource occupied by the reference connection segment in turns; 3. along the route of the reference segment, it is easy to judge whether the message arrives to the terminating node of the soft-rerouting because the information related with the replacing connection segment is carried in the message, if yes, the terminating node releases the resource occupied by the reference connection segment.

In step 109, if the originating node receives a response for switching failure sent by the terminating node or cannot receive any response from the terminating node within a time limit, add 1 to the failure counter. And if the counter does not exceed the predetermined threshold, go to the step 104, otherwise perform the step 110. In step 110, the resources occupied by the replacing connection segment is released and the replacing connection segment is thus deleted and then failure response is returned to the administrator or user in step 107.

In step 108, do not delete signaling state of the current connection at the originating and terminating nodes of the soft-rerouting, and after soft-rerouting succeeded, signaling collects the information of the current connection at the originating node (or the terminating node), then signaling refreshing message is sent to other nodes, and the other nodes update the local related states after receiving signaling refreshing message to synchronize connection states, thus the current connection and the replacing connection form one connection in signaling.

It should be understood that, if n (n>=1) connections with the same originating and terminating nodes need to be soft rerouted for user, these connections can be splitted into n single connections (split operation may be performed in user side or in the originating node of the soft-rerouting), each of which will be processed respectively by repeating step 101 to step 110.

Now an embodiment according to the present invention in which the RSVP-TE signaling protocol is used will be described.

Fig 3 shows the network topology according to the embodiment of the present invention. It is given that each node of the network is an optical crossing connection equipment, and each said node supports the RSVP-TE signaling. It is also given that there is only one link between every two nodes, and for convenience the link route is presented by collection of nodes, for example the current link is <ABCDE> where A is start node and E is end node and the link is double link. Now, the originating node of soft-rerouting is B (301) and the terminating node is D (302), and both store the routing and service information of the current connection, the reference connection segment is <BCD>, the replacing connection segment required by the administrator or user is <BCGHD>.

When the originating node B of the soft-rerouting receives the soft-rerouting request, the signaling for setting up the replacing connection segment is initiated firstly, and the reference connection segment is associated with the replacing connection segment at B and D when setting up the replacing connection segment. Because the current RSVP-TE signaling does not support the association operation, it is necessary to extend the RSVP-TE signaling, and in the present embodiment, one object is extended, that is Admin Status object, and three objects, namely Association Session, Association Sender Template and Association FILTER_SPEC are added, and these four objects are carried in all of the signaling message for communicating in soft-rerouting. Admin Status object (Class = 196, C-Type = 1) is extended to use one bit of its preserved field to identify the current status of the soft-rerouting. The format of the added Association Session object (Class = 1, C-Type = 17) is the same with that of LSP_TUNNEL_IPv4 Session object (Class = 1, C-Type = 7). The formats of Association Sender Template object (Class = 11, C-Type = 17) and Association FILTER_SPEC object (Class = 10, C-Type = 17) are the same with that of LSP_TUNNEL_IPv4 Sender Template object (Class = 11, C-Type = 7). The above three added objects together with the existing LSP_TUNNEL_IPv4 Session object, LSP_TUNNEL_IPv4 Sender Template object and LSP_TUNNEL_IPv4 FILTER_SPEC object are used to store the association relationship.

The signaling message collection utilized in setting up the replacing connection segment is the same with the current standard signaling message collection, and the signaling message flow is complied with the current standard.

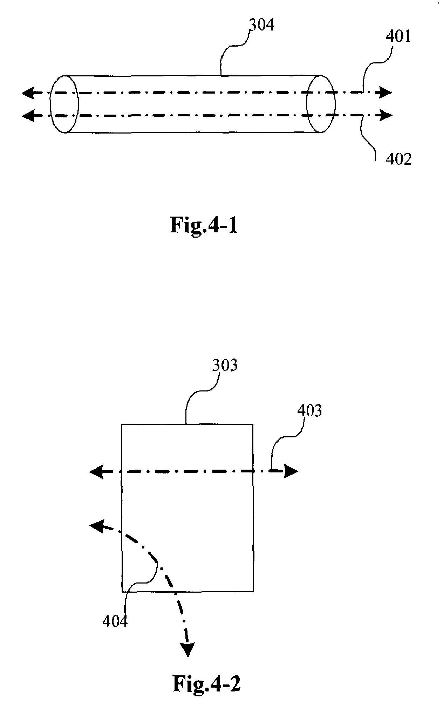

In the procedure of setting up the replacing connection segment, although the reference connection segment and the replacing connection segment both pass the link (304) between B and C (303), they use different resources. Referring to Fig 4-1, 401 is the resource occupied by the reference connection segment in the link 304 and 402 is the resource occupied by the replacing connection segment in the link 304; as well at the node C, the reference connection segment and the replacing connection segment which are not associated also use different resources. Referring to Fig 4-2, 403 is the resource occupied by the reference connection segment at C (303) and 404 is the resource occupied by the replacing connection segment at C (303).

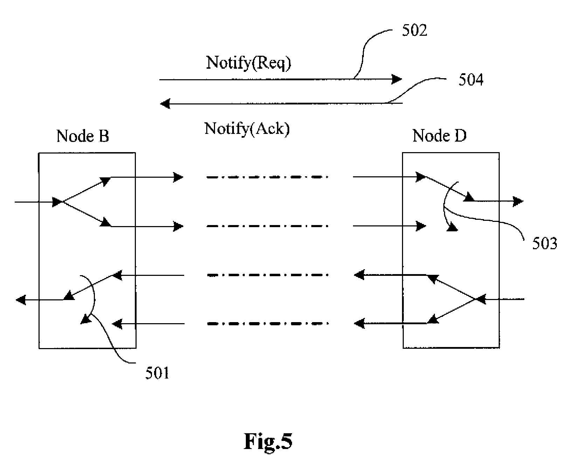

After the replacing connection segment is set up successfully, the reference connection segment and the replacing connection segment form 1+1 protection relationship, as shown in Fig 5. Fig. 5 also shows the service switching procedure. In this step, Notify message of RSVP-TE is used for communication, but since the current standard Notify message is one-way, it is extended to double-way here, and Error Codes are added to indicate service switching state, for example:
Error Code = 0xAB and Error Value = 1 mean service switching request of soft-rerouting. Notify message carrying the code is shown as Notify (Req) in Fig 5.
Error Code = 0xAB and Error Value = 2 mean service switching success of soft-rerouting. Notify message carrying the code is shown as Notify (Ack) in Fig 5.
Error Code = 0xAB and Error Value = 3 mean service switching failure of soft-rerouting.

In the meantime, Association Session and Association Sender Template objects are also carried in the Notify message.

Switching operation and signaling message timing shown in Fig 5 are described as following:
501: Node B switches the receiving to the replacing connection.
502: Node B sends Notify (Req) signaling message to Node D.
503: Node D switches the receiving to the replacing connection.
504: Node D sends Notify (Ack) signaling message to Node B.

Node B receives Notify (Ack) message from Node D, by which service switching is identified success, and success response is sent to the administrator or user and the resource occupied by the reference connection segment is deleted, and then node B send PathTear message of RSVP-TE to the node C, thus node C deletes the resource occupied by the reference connection segment at node C after receiving the PathTear message. As well, after the node C conducting corresponding operation, it is determined that the node is not the terminating node of the reference connection segment, then PathTear message will be sent toward the node D, and the node D does not send PathTear message to downstream nodes after receiving the PathTear message because it is identified as the terminating node of the reference connection segment by the association message.

Finally all node states of the new route are synchronized and connected by refreshing message, mainly update routing information and Session and Sender Template information of the nodes (BCGHD in the embodiment) of the replacing connection segment. The detail of the refreshing method in embodiment is as following.

First, at the originating node B of the soft-rerouting, refreshing message is constructed and routing information of the connection is collected as <ABCGHDE>, and flag bit of Admin Status object is set to refreshing state of soft-rerouting completed, source address of Sender Template is set to the address of node A and destination address of Session is set to the address of node E. RESV message is constructed and sent to upstream (node A) , and Path message is constructed and sent to downstream (node C).

Then, after receiving Resv message, the node A finds refreshing state of soft-rerouting finished by processing Admin Status object, then updates local signaling state, and constructs and sends Resv message toward upstream nodes for updating till arriving at the source node of the connection, here node A is the source node. Also, after receiving Path message, the node C finds refreshing state of soft-rerouting finished by processing Admin Status object, then updates local signaling state, and constructs and sends Path message to downstream nodes for updating till arriving at the destination node of the connection, here node E is the destination node.

The main characteristics of the embodiment according to the present invention can be concluded as following based on the details described above:
1. signaling message is used to set up the replacing connection and transmit association relationship;
2. the originating node of the rerouting may be any node of the connection and not limited to the source node;
3. at the originating node and the terminating node of the rerouting, the replacing connection segment and the reference connection segment are associated with each other, and 1+1 protection configuration or the like is formed between replacing connection segment and the reference connection segment at the originating node and the terminating node. And in other nodes, the replacing connection segment and the reference connection segment use different resources.
4. signaling message is used to communicate between the originating node and the terminating node of the rerouting to implement service switching.

### Industry Application

The present invention is implemented by signaling with high efficiency. After the soft-rerouting completed, the refreshing message is used to synchronize signaling state, resulting in signaling bandwidth saving. It is apparent from the implementing procedure that the present invention is not limited to special network topology and user signal carried in the network, moreover, the service interrupt period can hardly affect the user signal because of the 1+1 protection switching.

## Claims

1. A method for soft-rerouting in optical network, **characterized in that** it comprises the following steps:
initiating an instruction of soft-rerouting by an upper-layer application, in which information of an originating node, a terminating node and replacing routing nodes of a current connection to be rerouted is specified;
setting up a replacing connection segment with respect to a reference connection segment according to information of the replacing routing nodes by transmitting signaling message between the originating node and the terminating node;
switching a service from the reference connection segment to the replacing connection segment by transmitting a signaling message between the originating node and the terminating node.

2. The method as claimed in claim 1, **characterized in that** it further comprises:
deleting the reference connection segment and releasing resource occupied by the reference connection segment by transmitting signaling message if the switch is successful;
sending a response of switching success to the upper-layer application.

3. The method as claimed in claim 1, **characterized in that** it further comprises:
switching the service again from the reference connection segment to the replacing connection segment if the switch fails;
sending a response of switching failure to the upper-layer application if failure times achieve a predetermined threshold.

4. The method as claimed in claim 3, **characterized in that** it further comprises:
releasing resource occupied by the replacing connection segment.

5. The method as claimed in claim 2, **characterized in that** it further comprises:
collecting information of the nodes of the current connection by transmitting the signaling message;
updating local routing information of each node of the current connection according to the collected information.

6. The method as claimed in claim 1, **characterized in that** the step of setting up a replacing connection segment comprises:
establishing association relationship between the reference connection segment and the replacing connection segment according to the information of the originating node, the terminating node and replacing routing nodes after the originating node of the soft-rerouting receives the instruction of soft-rerouting, and generating signaling message for setting up the replacing connection segment, wherein said association relationship is carried in said signaling message;
setting up the replacing connection segment using resource which is different from that of the reference connection segment by transmitting the signaling message along the route of replacing connection;
associating the reference connection segment with the replacing connection segment by the terminating node of the soft-rerouting according to the association relationship carried in the signaling message, and sending signaling message for indicating that the replacing connection segment is set up along the nodes of the replacing routing towards the originating node.

7. The method as claimed in claim 1, **characterized in that** the step of switching a service from the reference connection segment to the replacing connection segment comprises:
switching the service at the originating node of the soft-rerouting, and sending the signaling message to the terminating node for requesting the service switching, in which information in relation with the request for service switching and status of the originating node after switching is carried;
switching the service at the terminating node of the soft-rerouting after the terminating node receives the signaling message for requesting service switching, and sending a signaling message back to the originating node, in which information relating to switching status of the terminating node is carried.

8. The method as claimed in claim 2, **characterized in that** the step of deleting the reference connection segment and releasing resource occupied by the reference connection segment comprises:
releasing the resource occupied by the reference connection segment at the originating node of the soft-rerouting and generating a signaling message for forcibly deleting the connection by the originating node of the soft-rerouting, in which information related to the replacing connection segment is carried in order to judge whether the signaling message for forcibly deleting the connection arrives at the terminating node of the reference connection segment;
transmitting the signaling message for forcibly deleting the connection along the routing of the reference connection segment, and releasing the resource occupied by the reference connection segment at the middle nodes and terminating node.

9. The method as claimed in claim 3, **characterized in that** the failed switch is judged by
receiving a response of the failed switch, or not receiving a response of successful switch in the predetermined period.

10. The method as claimed in claim 5, **characterized in that** the step of collecting information of the nodes of the current connection and updating local routing information of each node of the current connection comprises:
,collecting routing information of the current connection to construct a refreshing message by the originating node or the terminating node of the soft-rerouting, in which an identifier of refreshing status and the collected routing information of the current connection;
sending the refreshing message to upstream nodes and downstream nodes along the current connection;
each node updating local routing information according to the identifier of refreshing status and the collected routing information of the current connection and forwarding the refreshing message after receiving the refreshing message.
